# EUROPEAN PATENT APPLICATION

(11) **EP 4 692 754 A1**
(43) Date of publication of application: **11.02.2026**
(21) Application number: 23929293.1
(22) Date of filing: 30.03.2023
(51) Int. Cl.: G01N 3/08, G01N 3/18, G01N 3/04, G01N 3/02

(54) **STRESS CORROSION TEST DEVICE AND STRESS CORROSION TEST METHOD FOR GRID SPRING**

(71) Applicant: Suzhou Nuclear Power Research Institute Co., Ltd., Suzhou, Jiangsu 215004 (CN); China General Nuclear Power Group, Futian District Shenzhen Guangdong 518000 (CN); CGN Power Co., Ltd., Futian District Shenzhen Guangdong 518000 (CN)
(72) Inventor: HAN, Yaolei, Suzhou, Jiangsu 215004 (CN); PENG, Qunjia, Suzhou, Jiangsu 215004 (CN); LI, Weipeng, Suzhou, Jiangsu 215004 (CN); LUO, Kunjie, Suzhou, Jiangsu 215004 (CN); CHEN, Zhilin, Suzhou, Jiangsu 215004 (CN); MEI, Jinna, Suzhou, Jiangsu 215004 (CN); NIU, Shaorui, Suzhou, Jiangsu 215004 (CN); ZHANG, Yanwei, Suzhou, Jiangsu 215004 (CN)
(74) Representative: Westphal, Mussgnug & Partner, Patentanwälte mbB
(86) International application number: PCT/CN2023/085057
(87) International publication number: WO 2024/197696

(57) **Abstract**

A stress corrosion test device (1) for a grid spring (10), comprising an autoclave (2), a loader (3) and, arranged in the autoclave (2), an upper jig assembly and a lower jig assembly; the loader (3) is used for driving the upper jig assembly to move; the upper jig assembly and the lower jig assembly are respectively used for fixing a fuel cladding (9) and a grid spring (10); the lower jig assembly comprises a support plate (71) fixed to the bottom portion of the autoclave (2) and a pressing plate (72) fitting the support plate (71); the upper jig assembly comprises a clamping plate (61) and a jig plate (62), the clamping plate (61) penetrating through the fuel cladding (9) and then being fixed to the jig plate (62). The stress corrosion test device (1) for a grid spring (10) can effectively implement fixation and apply a loading condition conforming to the actual service environment of the grid spring (10) so as to simulate the actual service environment, and simulate the service state of the grid spring (10) in terms of three main stress corrosion influence factors, i.e. the material, the service environment and the stress state, thus more realistically evaluating the stress corrosion sensitivity of the grid spring (10).

## Description

### TECHNICAL FIELD

The present invention is specifically relates to a stress corrosion test device suitable for grid spring in high-temperature and high-pressure water environments, as well as a stress corrosion test method using the stress corrosion test device.

### THE RELATED ART

Stress corrosion cracking is one of the primary failure modes for spacer grid springs in nuclear power plant fuel assemblies under high-temperature and high-pressure water environments. Internationally, multiple incidents of stress corrosion cracking in such conditions have been occurred. Accurately assessing the service life of spacer grid springs in these environments is crucial for enhancing the safety and operational management of nuclear power plants.

During actual service, spacer grid springs are subjected to a constant deformation load induced by the insertion of fuel cladding tubes. Additionally, factors like flow-induced vibration can lead to slight vibrations. Therefore, evaluating the stress corrosion cracking susceptibility of spacer grid springs must account for conditions combining constant deformation with small-amplitude vibrations. The spacer grid spring is a thin, miniature component, typically with a thickness of less than 1 mm and a width of less than 5 mm, and it features multiple convex-concave structures. Current national standards, as well as ASTM and ISO standards, specify methods for stress corrosion testing using springs, weights, or tensile machines on standard specimens. However, there is a lack of reliable methods suitable for unique-shaped and small-sized samples like the spacer grid spring.

### SUMMARY OF THE INVENTION

In view of the above deficiencies in the prior art, the objective of the present invention is to provide a stress corrosion test device suitable for grid spring in high-temperature and high-pressure water environments.

To achieve this objective, the present invention adopts the following technical solution:

A stress corrosion test device for grid spring, characterized in that comprising an autoclave, a loading machine, an upper fixture assembly and a lower fixture assembly disposed inside the autoclave, wherein the loading machine is configured to drive movement of the upper fixture assembly, the upper fixture assembly and the lower fixture assembly are respectively configured to secure a fuel cladding and a grid spring, the lower fixture assembly comprises a support plate fixed to a bottom of the autoclave and a pressing plate engaged with the support plate, the upper fixture assembly comprises a clamping plate and a fixture plate, the clamping plate penetrates through the fuel cladding and is fixed to the fixture plate.

According to some preferred embodiments of the present invention, the support plate comprises a first fixing portion, an extension portion, a second fixing portion, a support portion, and a first pressing portion, the first fixing portion is configured to fix the support plate inside the autoclave, the first pressing portion is located at a top end of the extension portion.

According to some preferred embodiments of the present invention, the support portion and/or the first pressing portion is/are arranged perpendicularly to the second fixing portion.

According to some preferred embodiments of the present invention, the first pressing portion is configured to press upwardly against a lower side of the grid spring, and wherein a contact point between the first pressing portion and the grid spring is at a spot weld location of the grid spring.

According to some preferred embodiments of the present invention, the pressing plate comprises a third fixing portion and a second pressing portion, wherein one end of the third fixing portion is supported on a top end of the support portion, and another end of the third fixing portion is provided with the second pressing portion, the second pressing portion is located above the first pressing portion and both are within a same vertical plane, the first pressing portion and the second pressing portions cooperate to clamp the grid spring therebetween.

According to some preferred embodiments of the present invention, the second pressing portion is arranged perpendicularly to the third fixing portion; wherein the second fixing portion, the support portion, the third fixing portion, the first pressing portion, and the second pressing portion form a rectangular structure.

According to some preferred embodiments of the present invention, fastener is disposed between the second fixing portion and the third fixing portion to secure the support plate and the pressing plate and clamp the grid spring.

According to some preferred embodiments of the present invention, opposing inner edges of the first pressing portion and the second pressing portion are chamfered.

According to some preferred embodiments of the present invention, a sum of a height of the first pressing portion, a height of the second pressing portion, and a thickness of the spot weld location of the grid spring is equal to a height of the support portion.

According to some preferred embodiments of the present invention, a width of the pressing plate is less than a width of the support plate.

According to some preferred embodiments of the present invention, a width of the second pressing portion is less than a width of the first pressing portion, and an end of the third fixing portion contacting the support portion has a width less than a width of the support portion.

According to some preferred embodiments of the present invention, two ends of the second pressing portion in a width direction extend upward to form limiting portions configured to limit the first pressing portion between the two limiting portions; and two ends of the support portion in the width direction extend upward to form limiting portions configured to limit the third fixing portion between the two limiting portions.

According to some preferred embodiments of the present invention, comprising a connecting rod penetrating through a top of the autoclave, wherein one end of the connecting rod is connected to the loading machine, and another end is fixed to the fixture plate.

According to some preferred embodiments of the present invention, the clamping plate is a columnar body with a cross-section being a sector of a circle, wherein the clamping plate matches an inner wall of the fuel cladding.

According to some preferred embodiments of the present invention, the fixture plate is provided with a positioning groove configured to position the fuel cladding, wherein the positioning groove matches an outer wall of the fuel cladding.

According to some preferred embodiments of the present invention, the clamping plate has a rectangular bottom surface and an arc-shaped surface; wherein during assembly, the arc-shaped surface conforms to the inner wall of the fuel cladding.

When the stress corrosion test device for grid spring of the present invention is applied to evaluate the stress corrosion of grid spring, a certain deformation can be applied and then micro-amplitude vibration can be superimposed. By analyzing the actual cracking results, the stress corrosion sensitivity of the grid spring can be obtained.

The present invention further provides a stress corrosion test method for grid spring, using the aforementioned stress corrosion test device for grid, comprising the following steps:

installing the stress corrosion test device, placing the grid spring between the first pressing portion of the support plate and the second pressing portion of the pressing plate, and securing it;

driving the loading machine to bring the fuel cladding into contact with the grid spring, causing deformation of the grid spring under force; setting test parameters and initiating the test;

after a set duration, terminating the test, cooling and depressurizing the autoclave, and sampling for analysis.

Due to the adoption of the above technical solutions, the present invention has the following beneficial aspects compared to the prior art: the stress corrosion test device for grid spring of the present invention can effectively fix the grid spring and apply loading conditions that are consistent with the actual service environment of the grid spring, simulating the actual service environment. It simulates the service state of the grid spring in terms of three main factors affecting stress corrosion: material, service environment, and stress state, providing a more realistic evaluation of the stress corrosion sensitivity of the grid spring.

### BRIEF DESCRIPTION OF THE DRAWINGS

To provide a clearer explanation of the technical solutions in the embodiments of the present invention, the drawings required for describing the embodiments are briefly introduced below. Obviously, the drawings in the following description are merely some embodiments of the present invention. For those of ordinary skill in the art, other drawings may be derived from these drawings without creative effort.
FIG. 1 is a schematic structural diagram of a stress corrosion test device for grid spring according to a preferred embodiment of the present invention;
FIG. 2 is a schematic structural diagram of a support plate of a lower fixture assembly according to a preferred embodiment of the present invention;
FIG. 3 is a schematic structural diagram of a pressing plate of the lower fixture assembly according to a preferred embodiment of the present invention;
FIG. 4 and FIG. 5 are respectively schematic structural diagrams of a clamping plate of an upper fixture assembly according to a preferred embodiment of the present invention;
FIG. 6 is a schematic structural diagram of a fixture plate according to a preferred embodiment of the present invention;

In the Drawings: test device-1, autoclave-2, loading machine-3, connecting rod-4, base plate-5, clamping plate-61, fixture plate-62, positioning groove-621, mounting block-622, support plate-71, first fixing portion -711, extension portion -712, second fixing portion -713, support portion -714, first pressing portion -715, pressing plate-72, third fixing portion -721, second pressing portion -722, fastener-8, fuel cladding-9, grid spring-10, pillar-11.

### EMBODIMENTS FOR IMPLEMENTING THE INVENTION

To enable those skilled in the art to better understand the technical solutions of the present invention, the following will clearly and completely describe the technical solutions in the embodiments of the present invention in conjunction with the accompanying drawings. Obviously, the described embodiments are only a part of the embodiments of the present invention, not all of them. Based on the embodiments of the present invention, all other embodiments obtained by those of ordinary skill in the art without creative effort shall fall within the protection scope of the present invention.

Due to the complex structure of the grid spring, the present invention provides a device and method for stress corrosion cracking testing of grid spring in high-temperature and high-pressure water environments, which uses the spot weld locations on both sides of the grid spring as support points, employs a pressing plate and a support plate to cooperatively secure the grid spring, and applies pressure from the arc top of the fuel cladding tube. This comprehensively simulates the service conditions from perspectives such as structure, stress state, contact materials, and service environment of the grid spring, and effectively evaluates the stress corrosion cracking susceptibility of the grid spring. Details are as follows:

### Embodiment 1: Stress Corrosion Test Device For Grid Spring.

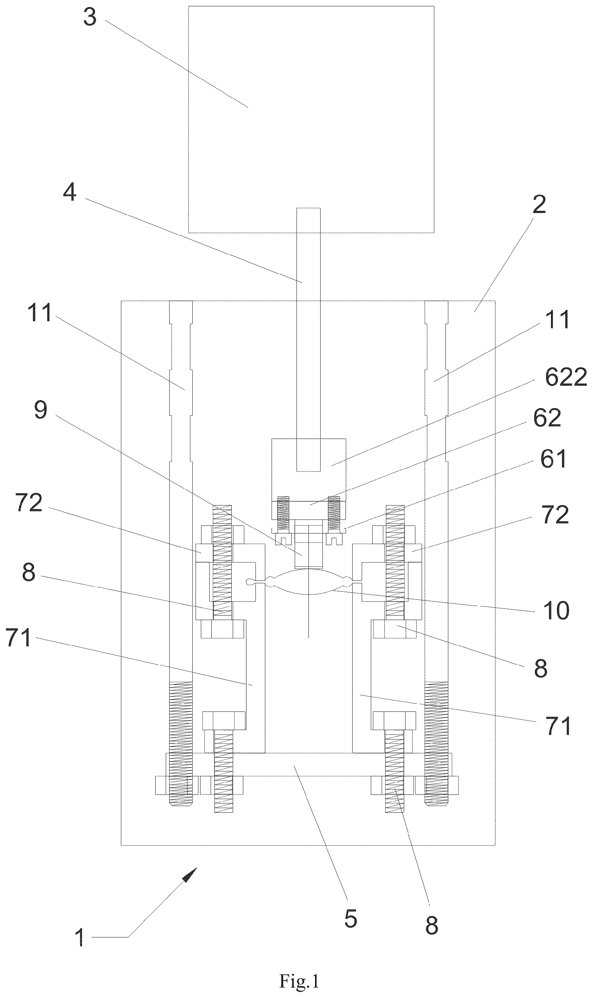

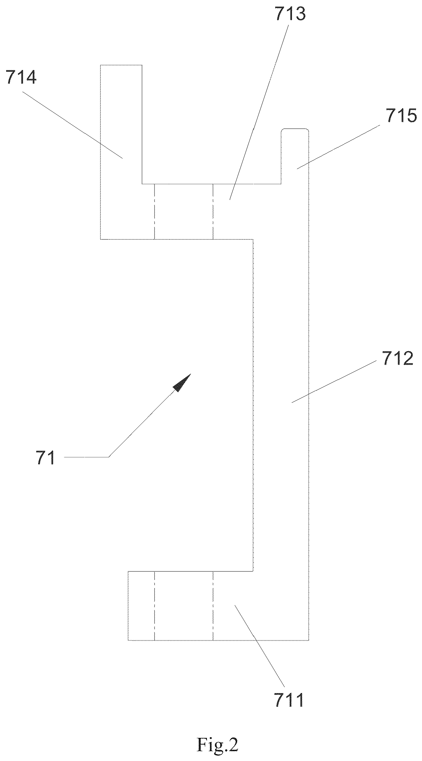

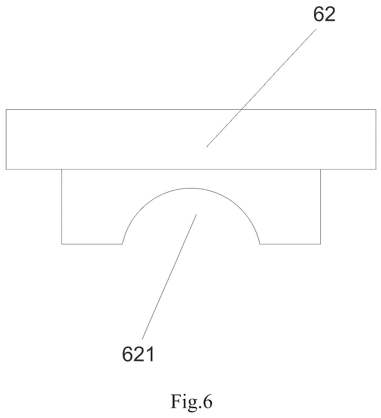

As shown in Figures 1~6, the stress corrosion test device for grid spring in this embodiment comprises an autoclave 2, a loading machine 3, an upper fixture assembly and a lower fixture assembly disposed inside the autoclave 2. The loading machine 3 is configured to drive movement of the upper fixture assembly, enabling precise displacement control and allowing for micro-amplitude high-frequency vibration at set displacements. The autoclave 2 is used to simulate the high-temperature and high-pressure water environment of a nuclear power plant and is equipped with a dynamic circulating water system to maintain water flow inside the autoclave, thereby more realistically simulating the service environment of the grid spring 10. The autoclave 2 is provided with pillar 11 therein to connect and fix a base plate 5. The lower fixture assembly is fixed on the base plate 5, thus maintaining the lower fixture assembly in a stationary state relative to the autoclave 2.

A connecting rod 4 is arranged between the loading machine 3 and the upper fixture assembly. The connecting rod 4 penetrates through the top of the autoclave 2 and is provided with a seal ring to prevent leakage of high-temperature and high-pressure water. It also incorporates a high-pressure water self-balancing structure to equilibrate forces on both ends of the connecting rod 4. The upper end of the connecting rod 4 is fixed to the loading machine 3, and the lower end of the connecting rod 4 is fixed to the upper fixture assembly.

The upper fixture assembly and the lower fixture assembly are respectively configured to secure a fuel cladding 9 and a grid spring 10. The structures of both are detailed below:

The lower fixture assembly comprises a support plate 71 fixed to the bottom of the autoclave 2 and a pressing plate 72 engaged with the support plate 71. Specifically, the support plate 71 comprises a first fixing portion 711, an extension portion 712, a second fixing portion 713, a support portion 714, and a first pressing portion 715. The first fixing portion 711 is used to fix the support plate 71 to the base plate 5 of the autoclave 2. The first pressing portion 715 is located at the top end of the extension portion 712. The first fixing portion 711 and the second fixing portion 713 are arranged parallel to each other and are respectively positioned at both ends of the extension portion 712. The support portion 714 and the first pressing portion 715 are respectively located at both ends of the second fixing portion 713 and are both arranged perpendicularly to the second fixing portion 713.

The first pressing portion 715 and the support portion 714 are arranged parallel to each other. The first pressing portion 715 presses upwardly against a lower side of the grid spring 10, and wherein a contact point between the first pressing portion 715 and the grid spring 10 is at a spot weld location of the grid spring 10. The first pressing portion 715 is provided with a circular arc chamfer to avoid stress concentration at the contact point, which could lead to premature cracking and test failure. The support portion 714 contacts the pressing plate 72 and is used to support and resist the pressing plate 72. For stability, a sum of a height of the first pressing portion 715 which is contacted to the grid spring 10, a height of the second pressing portion 722, and a thickness of the spot weld location of the grid spring 10 is equal to a height of the support portion 714. This ensures that after tightening, the bolt contact surfaces of the fastener 8 are parallel, meaning the second fixing portion and the third fixing portion remain parallel for improved force distribution. The first fixing portion 711 is connected to the base plate 5 via a fastener 8, and the extension portion 712 supports the force applied to the grid spring 10.

The pressing plate 72 presses downwardly against a top side of the grid spring 10, and wherein a contact point between the pressing plate 72 and the grid spring 10 is at a spot weld location of the grid spring 10. The pressing plate 72 is provided with a circular arc chamfer to avoid stress concentration at the contact point, which could lead to premature cracking and test failure. Specifically, the pressing plate 72 comprises a third fixing portion 721 and a second pressing portion 722. The second pressing portion 722 has a circular arc chamfer. One end of the third fixing portion 721 is supported on the top of the support portion 714, and the other end of the third fixing portion 721 is provided with the second pressing portion 722. The second pressing portion 722 is located above the first pressing portion 715 and both are within the same vertical plane, cooperating to clamp the grid spring 10 therebetween. The second pressing portion 722 is arranged perpendicularly to the third fixing portion 721. The second fixing portion 713, support portion 714, third fixing portion 721, first pressing portion 715, and second pressing portion 722 form a rectangular structure. Fastener 8 is disposed between the second fixing portion 713 and the third fixing portion 721 to secure the support plate 71 and the pressing plate 72 and clamp the grid spring 10, maintaining the grid spring 10 in a fixed position.

To prevent relative rotation between the pressing plate 72 and the support plate 71, which could affect the force applied to the grid spring 10, in this embodiment, the width of the pressing plate 72 is less than that of the support plate 71. Specifically, the width of the second pressing portion 722 is less than that of the first pressing portion 715, and the width of the end of the third fixing portion 721 that contacts the support portion 714 is less than the width of the support portion 714. Additionally, both ends of the second pressing portion 722 in the width direction extend upward to form limiting portions, confining the first pressing portion 715 between the two limiting portions. Similarly, the end of the third fixing portion 721 is confined between limiting portions formed at both ends of the support portion 714. This arrangement ensures that the upper parts of the pressing plate 72 and the support plate 71 are interlocked, preventing rotation and providing better force application on the grid spring 10.

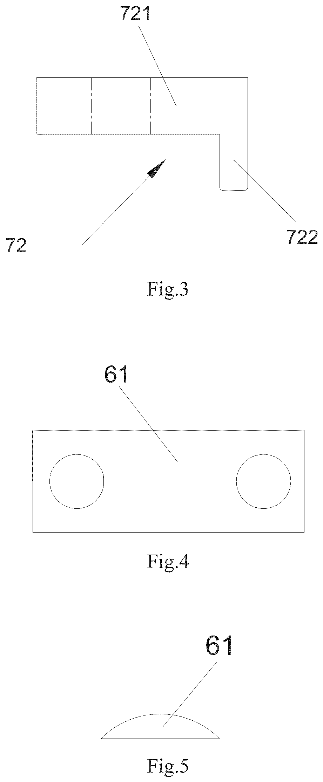

The upper fixture assembly includes a clamping plate 61 and a fixture plate 62 for cooperatively securing the fuel cladding 9. The clamping plate 61 penetrates through the fuel cladding 9 and is fixed to the fixture plate 62. The clamping plate 61 is a columnar body with a cross-section that is a segment of a circle, as shown in Figures 4 and 5. The clamping plate 61 is configured to conform to the inner wall of the fuel cladding 9, meaning the surface of the clamping plate 61 that contacts the inner wall of the fuel cladding 9 is a segment of a circle that matches the inner wall of the fuel cladding 9. The fixture plate 62 is provided with a positioning groove 621 for positioning the fuel cladding 9. The positioning groove 621 corresponds to the outer wall of the fuel cladding 9. The fuel cladding 9, which is made of the same material as the actual service material of the nuclear power plant, is used to apply pressure to make the results more accurate.

The fuel cladding 9 is cylindrical, and the clamping plate 61 is a matching segment of a cylinder with a length greater than that of the fuel cladding 9. The clamping plate 61 has a rectangular bottom surface and an arc-shaped surface. During installation, the clamping plate 61 passes through the fuel cladding 9, and the arc-shaped surface conforms to the inner wall of the fuel cladding 9. By providing mounting holes through the thickness of the clamping plate 61, fasteners 8 are installed upward from the bottom surface of the clamping plate 61 to secure the clamping plate 61 and the fuel cladding 9 to the fixture plate 62. The upper part of the fixture plate 62 is provided with a mounting block 622, which is fixed to the bottom end of the connecting rod 4.

All components that contact the grid spring 10 are made of the same material as the grid spring 10 to avoid galvanic effects.

### Embodiment 2: Stress Corrosion Test Method For Grid Spring 10.

This embodiment provides a stress corrosion test method using the stress corrosion test device according to Embodiment 1, which specifically comprises the following steps:

### (1) Install fixtures and samples:

First, connect the loading machine 3, connecting rod 4, and autoclave 2 together. Then, connect the mounting block 622 to the connecting rod 4, for example, via threaded connection; drive the loading machine 3 to raise the connecting rod 4, moving the upper fixture assembly away from the lower fixture assembly.

Insert the clamping plate 61 through the fuel cladding 9, and secure both sides of the clamping plate 61 to the fixture plate 62 using fasteners 8. The clamping plate 61 and fuel cladding 9 are accommodated and positioned in the positioning groove 621. Then, fix the entire upper fixture plate 62 to the mounting block 622 of the upper fixture. Install the pillar 11 inside the autoclave 2 to the autoclave 2. Connect two support plates 71 to the base plate 5 using fasteners 8.

Place the grid spring 10 on the support points of the support plate 71, i.e., on the first pressing portion 715. Install the pressing plate 72 onto the support plate 71, and connect the pressing plate 72 and support plate 71 using fasteners 8 to secure the grid spring 10. Fix the base plate 5, lower fixture assembly, and samples as a whole to the pillar 11 inside the autoclave 2.

### (2) Conduct the stress corrosion test:

After ensuring the entire equipment is sealed without issues, pressurize and heat to achieve the target pressure and temperature inside the autoclave 2. Drive the loading machine 3 to bring the fuel cladding 9 into contact with the grid spring 10. Set the downward stroke length of the fuel cladding 9 according to test conditions, causing the grid spring 10 to deform under force.

Based on test conditions, set constant displacement, constant load, or superimpose a certain amplitude of fatigue load after pressing to a constant displacement. After reaching the set time or other set conditions, terminate the test, cool down, depressurize, and take samples for analysis.

### (3) Evaluate stress corrosion performance:

It is possible to observe the crack initiation by sampling at regular intervals, or until the grid spring 10 fractures and then analyze the samples. When using interval sampling observation, the stress corrosion sensitivity can be evaluated by comparing the cracking time, crack length, and quantity under different conditions. When analyzing the samples after the grid spring 10 fractures, the stress corrosion sensitivity can be evaluated by the fracture time and fracture characteristics. If the loading conditions include fatigue loads, it is necessary to record the fatigue cycles and analyze the cracking characteristics of the grid spring 10 in conjunction with fatigue-related knowledge.

The device and method for stress corrosion cracking testing of grid spring in high-temperature and high-pressure water environments according to the present invention overcome the lack of fixtures and methods for grid spring stress corrosion testing, solving the problem of accurately evaluating stress corrosion susceptibility for similar grid springs.

The foregoing embodiments are merely intended to illustrate the technical concepts and features of the present invention, enabling those familiar with the art to understand the content of the present invention and implement it accordingly. They are not intended to limit the protection scope of the present invention. Any equivalent changes or modifications made based on the spirit and essence of the present invention should be encompassed within the protection scope of the present invention.

## Claims

1. A stress corrosion test device for grid spring, **characterized in that** comprising an autoclave, a loading machine, an upper fixture assembly and a lower fixture assembly disposed inside the autoclave, wherein the loading machine is configured to drive movement of the upper fixture assembly, the upper fixture assembly and the lower fixture assembly are respectively configured to secure a fuel cladding and a grid spring, the lower fixture assembly comprises a support plate fixed to a bottom of the autoclave and a pressing plate engaged with the support plate, the upper fixture assembly comprises a clamping plate and a fixture plate, the clamping plate penetrates through the fuel cladding and is fixed to the fixture plate.

2. The test device according to claim 1, **characterized in that** the support plate comprises a first fixing portion, an extension portion, a second fixing portion, a support portion, and a first pressing portion, wherein the first fixing portion is configured to fix the support plate inside the autoclave, wherein the first fixing portion and the second fixing portion are respectively located at two ends of the extension portion, wherein the support portion and the first pressing portion are respectively located at two ends of the second fixing portion, wherein the first pressing portion is located at a top end of the extension portion.

3. The test device according to claim 2, characterized in thatthe support portion and/or the first pressing portion is/are arranged perpendicularly to the second fixing portion.

4. The test device according to claim 2, **characterized in that** the first pressing portion is configured to press upwardly against a lower side of the grid spring, and wherein a contact point between the first pressing portion and the grid spring is at a spot weld location of the grid spring.

5. The test device according to claim 2, **characterized in that** the pressing plate comprises a third fixing portion and a second pressing portion, wherein one end of the third fixing portion is supported on a top end of the support portion, and another end of the third fixing portion is provided with the second pressing portion, the second pressing portion is located above the first pressing portion and both are within a same vertical plane, the first pressing portion and the second pressing portion cooperate to clamp the grid spring therebetween.

6. The test device according to claim 5, **characterized in that** the second pressing portion is arranged perpendicularly to the third fixing portion; wherein the second fixing portion, the support portion, the third fixing portion, the first pressing portion, and the second pressing portion form a rectangular structure.

7. The test device according to claim 5, **characterized in that** fastener is disposed between the second fixing portion and the third fixing portion to secure the support plate and the pressing plate and clamp the grid spring.

8. The test device according to claim 5, **characterized in that** opposing inner edges of the first pressing portion and the second pressing portion are chamfered.

9. The test device according to claim 5, **characterized in that** a sum of a height of the first pressing portion, a height of the second pressing portion, and a thickness of the spot weld location of the grid spring is equal to a height of the support portion.

10. The test device according to claim 5, **characterized in that** a width of the pressing plate is less than a width of the support plate.

11. The test device according to claim 10, **characterized in that** a width of the second pressing portion is less than a width of the first pressing portion, and an end of the third fixing portion contacting the support portion has a width less than a width of the support portion.

12. The test device according to claim 11, **characterized in that** two ends of the second pressing portion in a width direction extend upward to form limiting portions configured to limit the first pressing portion between the two limiting portions; and two ends of the support portion in the width direction extend upward to form limiting portions configured to limit the third fixing portion between the two limiting portions.

13. The test device according to claim 1, **characterized in that** comprising a connecting rod penetrating through a top of the autoclave, wherein one end of the connecting rod is connected to the loading machine, and another end of the connecting rod is fixed to the fixture plate.

14. The test device according to claim 1, **characterized in that** the clamping plate is a columnar body with a cross-section being a sector of a circle, wherein the clamping plate matches an inner wall of the fuel cladding.

15. The test device according to claim 14, characterized in thatthe fixture plate is provided with a positioning groove configured to position the fuel cladding, wherein the positioning groove matches an outer wall of the fuel cladding.

16. The test device according to claim 14, **characterized in that** the clamping plate has a rectangular bottom surface and an arc-shaped surface; wherein during assembly, the arc-shaped surface conforms to the inner wall of the fuel cladding.

17. A stress corrosion test method for grid spring, using the test device according to any one of claims 1~16, **characterized in that** comprising the following steps:
installing the stress corrosion test device, placing the grid spring between the first pressing portion of the support plate and the second pressing portion of the pressing plate, and securing it;
driving the loading machine to bring the fuel cladding into contact with the grid spring, causing deformation of the grid spring under force; setting test parameters and initiating the test;
after a set duration, terminating the test, cooling and depressurizing the autoclave, and sampling for analysis.
